(19) Europäisches Patentamt
European Patent Office
Office européen des brevets

(11) **EP 1 409 856 B1**

(12) **FASCICULE DE BREVET EUROPEEN**

(45) Date de publication et mention
de la délivrance du brevet:
**10.09.2008 Bulletin 2008/37**

(21) Numéro de dépôt: **01907696.7**

(22) Date de dépôt: **25.01.2001**

(51) Int Cl.:
**F01P 7/16** *(2006.01)*      **F01P 11/02** *(2006.01)*

(86) Numéro de dépôt international:
**PCT/FR2001/000237**

(87) Numéro de publication internationale:
**WO 2001/057373 (09.08.2001 Gazette 2001/32)**

(54) **PROCEDE ET DISPOSITIF DE REFROIDISSEMENT D'UN MOTEUR DE VEHICULE AUTOMOBILE**

VERFAHREN UND EINRICHTUNG ZUR KÜHLUNG EINER BRENNKRAFTMASCHINE EINES KRAFTFAHRZEUGS

METHOD AND DEVICE FOR COOLING A MOTOR VEHICLE ENGINE

(84) Etats contractants désignés:
**AT BE CH CY DE DK ES FI FR GB GR IE IT LI LU MC NL PT SE TR**

(30) Priorité: **03.02.2000 FR 0001359**

(43) Date de publication de la demande:
**21.04.2004 Bulletin 2004/17**

(73) Titulaire: **Peugeot Citroën Automobiles**
**92200 Neuilly Sur Seine (FR)**

(72) Inventeurs:
• **LE LIEVRE, Armel**
  **F-78360 Montesson (FR)**
• **TOMASSELI, Ludovic**
  **F-92400 Courbevoie (FR)**

(74) Mandataire: **Seytre, Françoise**
**PSA Peugeot Citroen**
**Département OPS/BPI**
**18, rue des Fauvelles**
**92250 La Garenne Colombes (FR)**

(56) Documents cités:
**EP-A- 0 893 581**      **DE-A- 19 948 160**
**FR-A- 2 722 244**      **US-A- 4 913 107**
**US-A- 5 215 044**      **US-A- 5 241 926**
**US-A- 5 836 269**

## Description

L'invention se rapporte à un procédé et à un dispositif de refroidissement d'un moteur de véhicule automobile.

L'invention concerne plus particulièrement un dispositif de refroidissement comportant un circuit hydraulique de fluide caloporteur de refroidissement, associé à une pompe de circulation de celui-ci à travers le moteur du véhicule et différentes branches du circuit. Des équipements thermiques du véhicule peuvent être disposés dans les différentes branches du circuit.

Les systèmes de refroidissement sont conçus pour garantir la tenue des moteurs aux contraintes thermomécaniques issues de la combustion. Par ailleurs, des fonctions complémentaires sont mises en oeuvre en plus du refroidissement principal du moteur, pour améliorer le rendement global ou offrir et garantir des prestations aux utilisateurs de véhicules, telles que, par exemple, le chauffage de l'habitacle.

Les systèmes de refroidissement sont dimensionnés à partir des seuls points de fonctionnement à régime maximal et à pleine charge du moteur et sont donc surdimensionnés dans la majorité des cas d'utilisation des véhicules.

Ainsi, les paramètres de fonctionnement du moteur ne sont pas optimisés, ce qui entraîne une dégradation des performances de ce dernier, tel qu'une consommation accrue, un niveau élevé d'émission de polluants ainsi qu'une réduction du confort thermique et acoustique du véhicule.

Il est connu du brevet US 4913107 sur lequel est bâti le préambule de la revendication 1 un procédé de refroidissement notamment pour moteurs de véhicules automobiles tel que lorsque la température du fluide est supérieure à une température d'environ 90-100°C, une quantité importante de fluide de refroidissement est admise dans une branche de dégazage, alors que seule une quantité minimum est autorisée pour des températures plus basses.

Selon l'invention, le procédé comporte de plus une étape de comparaison de la température du fluide de refroidissement avec une seconde température seuil, de façon que, lorsque la température du fluide est supérieure à cette seconde température seuil, la quantité de fluide admise à circuler dans la branche est supérieure à la quantité admise à circuler dans cette même branche lorsque la température du fluide est inférieure à la seconde température seuil.

Un autre but de la présente invention est de proposer un dispositif de refroidissement d'un moteur de véhicule automobile, palliant tout ou partie des inconvénients de l'art antérieur relevés ci-dessus.

Ce but est atteint par le fait que le dispositif de refroidissement d'un moteur de véhicule automobile, du type comportant un circuit hydraulique de fluide caloporteur de refroidissement, associé à une pompe de circulation de celui-ci à travers le moteur du véhicule et différentes branches du circuit, dans lesquelles sont disposés des équipements thermiques du véhicule, au moins certaines des branches du circuit étant munies d'actionneurs pilotés électroniquement de régulation de la circulation du fluide dans celles-ci, le dispositif comportant des moyens d'acquisition d'informations relatives aux conditions de fonctionnement du véhicule, raccordés à des moyens de pilotage du fonctionnement des actionneur, pour réguler le volume et le débit de fluide en circulation dans le circuit hydraulique afin d'optimiser le fonctionnement du moteur, le circuit comportant une branche de dégazage munie d'un actionneur piloté électroniquement et dans laquelle est disposée une boîte de dégazage, les moyens d'acquisition d'informations étant aptes à déterminer la température du liquide de refroidissement, pour que les moyens de pilotage régulent la circulation de fluide dans la branche de dégazage de façon que, lorsque la température du fluide est supérieure à une première température seuil, la quantité de fluide circulant dans la branche est supérieure à la quantité de fluide circulant dans cette même branche lorsque la température du fluide est inférieure à la première température seuil et en ce que les moyens de pilotage régulent la circulation de fluide dans la branche de dégazage, de façon que, lorsque la température du fluide est supérieure à une seconde température seuil, la quantité de fluide circulant dans la branche est supérieure à la quantité de fluide circulant dans cette même branche lorsque la température du fluide est inférieure à cette seconde température seuil

Par ailleurs, l'invention peut comporter l'une ou plusieurs des caractéristiques suivantes :

- lorsque la température du fluide est comprise entre les première et seconde températures seuil, les moyens de pilotage régulent la circulation de fluide dans la branche (6) en fonction de la température du liquide de refroidissement, de façon que la quantité de liquide circulant dans la branche augmente lorsque la température du liquide augmente,

- l'actionneur de la branche de dégazage est du type "tout ou rien", les moyens de pilotage coopérant avec les moyens d'acquisition, pour commander l' ouverture de l'actionneur lorsque la température du fluide est supérieure à la seconde température seuil,

- la seconde température seuil est comprise entre 60 et 100 degrés environ,

- la première température seuil est comprise entre 20 et 60 degrés environ et définit la température de fluide en dessous de laquelle l'état du moteur est dit "froid",

- les moyens de pilotage coopèrent avec les moyens d'acquisition, pour calculer d'une part de la puissance moyenne instantanée fournie par le moteur puis, d'autre part, la première température seuil en fonction de la puissance moyenne instantanée et d'une modélisation déterminée du fonctionnement du moteur définissant son état froid (première température seuil) en fonction puissance moyenne,

- lorsque la température du liquide de refroidissement est inférieure à la première température seuil, les moyens de pilotage commandent l'ouverture de l'actionneur et la quantité de fluide circulant dans la branche de dégazage en fonction de la puissance moyenne fournie par le moteur, la quantité de liquide admise à circuler dans la branche augmentant lorsque la puissance moyenne (Pm) fournie par le moteur augmente,

- l'actionneur de la branche de dégazage est du type "tout ou rien", les moyens de pilotage commandant l'ouverture de l'actionneur selon un signal carré variable en fonction de la puissance moyenne fournie par le moteur,

- l'actionneur de la branche de dégazage est du type à ouverture et fermeture totales, les moyens de pilotage commandant l'ouverture de l'actionneur selon un signal carré variable en fonction de la température du liquide de refroidissement,

- les moyens de pilotage commandant l'ouverture de l'actionneur selon un signal carré tel que la quantité de liquide circulant dans la branche augmente linéairement avec la température du liquide de refroidissement.

- le temps d'ouverture de la vanne est constant, la période du signal étant inversement proportionnelle à la température du liquide de refroidissement.

D'autres particularités et avantages apparaîtront à la lecture de la description ci-après, faite en référence aux figures dans lesquelles :

- la figure 1 représente schématiquement la structure et le fonctionnement d'un premier exemple de réalisation du dispositif de refroidissement selon l'invention,

- la figure 2 représente un second mode de réalisation du dispositif de refroidissement selon l'invention,

- la figure 3 représente, sur un même graphique, un exemple de variation au court du temps t de la température T du liquide de refroidissement et d'une première température seuil $T_1$,

- la figure 4 représente un exemple de variation de la température Th de l'huile de lubrification du moteur en fonction du temps t, ainsi que le signal représentant les états d'ouverture O et de fermeture F de l'actionneur piloté électroniquement de la première branche du circuit,

- la figure 5 représente les états d'ouverture O et de fermeture F de l'actionneur de la branche de dégazage en fonction de la température T du liquide de refroidissement,

- la figure 6 représente un exemple de variation de la période P du signal de commande de l'actionneur de la branche de dégazage en fonction de la température T du liquide de refroidissement,

- la figure 7 représente l'état d'ouverture de la vanne de by-pass en fonction de la température T du liquide de refroidissement,

- la figure 8 représente schématiquement un exemple de couplage de l'ouverture de la vanne de by-pass en fonction de l'ouverture de la vanne d'un radiateur,

- la figure 9 représente deux exemples de variation de la vitesse de rotation d'un groupe moto ventilateur, en fonction de la variation de la température T du liquide de refroidissement,

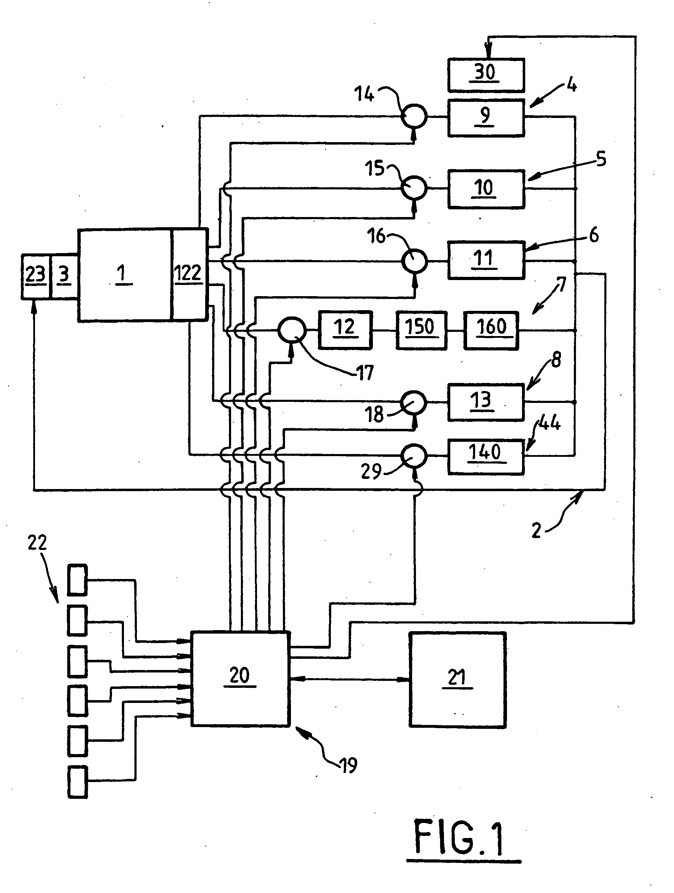

La figure 1 représente un exemple de réalisation préféré d'un dispositif de refroidissement selon l'invention. Le dispositif de refroidissement comporte un circuit hydraulique 2 contenant un fluide caloporteur de refroidissement.
Une pompe 3 hydraulique est associée au circuit 2, pour assurer la circulation du fluide à travers le moteur 1 et différentes branches 4, 5, 6, 7, 8, 44 du circuit 2. De préférence, la pompe 3 est une pompe de type mécanique, cependant, l'emploi d'une pompe électrique peut également être envisagé.
Les branches 4, 5, 6, 7, 8, 44 du circuit 2 sont alimentées en liquide de refroidissement à partir d'un boîtier 122, ou "Boîtier de Sortie d'Eau" (BSE). Le boîtier 122, qui est fixé au moteur 1, et de préférence à la culasse du moteur 1, assure la collecte du liquide de refroidissement ayant circulé dans le moteur 1. Le liquide de refroidissement ayant circulé dans les branches est récupéré quant à lui par un collecteur d'entrée d'eau 23 avant sa recirculation dans le moteur 1.
Avantageusement, au moins certaines des branches 4, 5, 6, 7, 8, 44 du circuit 2 sont munies d'actionneurs pilotés électroniquement respectifs 14, 15, 16, 17, 18, 29 de régulation de la circulation du fluide dans celles-ci. Les actionneurs pilotés électroniquement sont, par exemple, des électrovannes. Par ailleurs, le dispositif comporte des moyens 22 d'acquisition d'informations relatives aux conditions de fonctionnement du véhicule. Les moyens 22 d'acquisition sont raccordés à des moyens 19 de pilotage du fonctionnement d'au moins une partie des actionneurs 14, 15, 16, 17, 18, 29, pour réguler le volume et le débit de fluide en circulation dans le circuit hydraulique 2 afin d'optimiser le fonctionnement du moteur.

Les moyens de pilotage 19 ou unité de traitement d'information peuvent comporter tout calculateur 20 approprié, tel que, par exemple, un "Boîtier de Servitude Intelligent" (BSI) de type connu. Le calculateur 20 est associé à des moyens de stockage d'information 21 comportant, par exemple, une mémoire programmable et/ou une mémoire à lecture seule. Le calculateur 20 est également relié à des moyens 22 d'acquisition d'informations relatives aux conditions de fonctionnement du véhicule, comportant, par exemple, divers capteurs ou d'autres calculateurs tel qu'un calculateur de pilotage du moteur.

De préférence, les moyens 22 d'acquisition d'informations sont aptes à déterminer au moins l'un des paramètres suivants : le régime du moteur, le couple du moteur, la vitesse du véhicule, la température de l'huile de lubrification du moteur, la température du liquide de refroidissement du moteur, la température des gaz d'échappement du moteur, la température de l'air extérieur au véhicule et la température à l'intérieur de l'habitacle. Les différentes informations relatives aux conditions de fonctionnement du véhicule sont traitées et analysées par le calculateur 20, pour piloter le fonctionnement des actionneurs 14, 15, 16, 17, 18, 29 et éventuellement celui de la pompe 3.

Selon l'invention, le débit ou volume de liquide de refroidissement admis ou non à circuler dans les différentes branches 4, 5, 6, 7, 8, 44 du circuit 2 est fonction de l'état d'échauffement du moteur 1. Par exemple, il est possible de définir trois états du moteur 1, un premier état dans lequel le moteur est dit "froid", un second dans lequel le moteur 1 est dit "chaud", et un troisième état dit "intermédiaire" entre les états chaud et froid.

De préférence, l'état thermique du moteur 1 est caractérisé en fonction de la température T du liquide de refroidissement, de préférence à la sortie du moteur 1. Ainsi, lorsque la température du liquide de refroidissement est inférieure à une première température seuil $T_1$ déterminée, l'état du moteur 1 est dit froid. De même, lorsque la température T du liquide de refroidissement est supérieure à une seconde température seuil $T_2$ déterminée, l'état du moteur 1 est dit chaud. Enfin, lorsque la température du liquide de refroidissement est comprise entre les première $T_1$ et seconde $T_2$ températures seuil, l'état du moteur 1 est dit intermédiaire.

La première $T_1$ et/ou la seconde $T_2$ température seuil peuvent être des valeurs fixes ou variables déterminées en fonction du type du moteur 1. De préférence, la première $T_1$ et/ou la seconde $T_2$ température seuil sont des variables en fonction du type du moteur 1 et d'au moins un paramètre de fonctionnement du moteur 1. Par exemple, les première $T_1$ et/ou seconde $T_2$ températures seuil sont des fonctions de la puissance moyenne Pm fournie par le moteur 1. C'est-à-dire que les moyens de pilotage 19 coopèrent avec les moyens 22 d'acquisition, pour calculer la puissance moyenne instantanée Pm fournie par le moteur 1.

Les moyens de pilotage 19 calculent ensuite la première $T_1$ et/ou la seconde $T_2$ température seuil, en fonction de la puissance moyenne Pm instantanée et d'une modélisation déterminée du fonctionnement du moteur 1. La modélisation du moteur définit les états froid, chaud et intermédiaire (première $T_1$ et seconde $T_2$ températures seuil) en fonction de la puissance moyenne Pm fournie par ce dernier.

La puissance instantanée P(t) en kiloWatt (kW) fournie par le moteur à l'instant t est donnée par la relation suivante :

$$P(t) = \frac{2\pi.N.C}{60 \times 1000} \; ;$$ dans laquelle N est le régime instantané du
moteur en tour/min, et C le couple instantané du moteur en N.m. Les valeurs du régime N et du couple C peuvent être mesurées par les moyens 22 d'acquisition de données, c'est-à-dire par des capteurs appropriés. Classiquement, le régime N du moteur est compris entre 0 et 6000 tr/min. environ, tandis que le couple C est compris entre 0 et 350 N.m. environ.

Les moyens de pilotage 19 calculent ensuite la puissance P(t) fournie par le moteur à l'instant t et la puissance moyenne Pm(t) fournie par le moteur à l'instant t. La puissance moyenne Pm(t) à l'instant t peut être calculée par la relation suivante :

$$Pm(t) = \frac{(t-1) \times Pm(t-1) + Pm(t)}{t},$$

dans laquelle Pm(t-1) est la puissance moyenne à l'instant (t-1). Bien entendu, la puissance moyenne peut être calculée par tout autre formule équivalente,

telle que : $$Pm(t) = \frac{c.Pm(t-1) + kP(t)}{c+k},$$

dans laquelle Pm(t-1) est la puissance moyenne à l'instant (t-1), P(t) la puissance instantanée à l'instant t, et c et k des coefficients pondérateurs.

Le calculateur 19 et/ou les moyens 21 de stockage d'information 21 peuvent contenir la modélisation du fonctionnement du moteur 1, définissant son état froid, chaud et intermédiaire (première $T_1$ et seconde températures seuil $T_2$) en fonction puissance moyenne Pm. C'est-à-dire que pour un type de moteur donné, on établit empiriquement et/ou par calcul des tables de correspondance donnant les températures seuil $T_1$ et $T_2$ en fonction de la puissance moyenne Pm du moteur 1. Ces tables ou modélisations, qui sont fonction du type de moteur, sont par exemple des fonctions polynomiales. La première température seuil $T_1$ est ainsi, en général, une fonction décroissante de la puissance moyenne.

La première température seuil $T_1$ peut varier entre 20 et 60 degrés environ, et de préférence entre 30 et 50 degrés. La seconde température seuil $T_2$ peut varier quant à elle entre 60 et 100 degrés environ. Cependant, la seconde température seuil $T_2$ est en général sensiblement constante autour de la valeur de 80 degrés.

Ainsi, les moyens de pilotage 19 coopèrent avec les moyens 22 d'acquisition de données, pour comparer la température T du liquide de refroidissement avec les deux températures seuil $T_1$ et $T_2$.

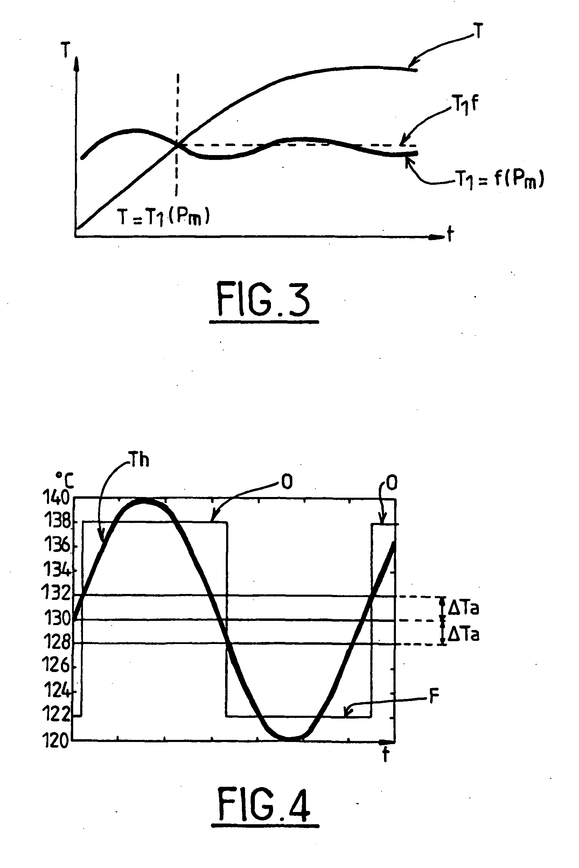

Par soucis de simplification, la valeur de la première température seuil $T_1$ peut être figée par les moyens 19 de pilotage dès que la température T mesurée du liquide de refroidissement atteint la première température seuil $T_1$. En effet, la figure 3 illustre, sur un même graphique, un exemple de variation au court du temps t : de la température T du liquide de refroidissement, et de la première température seuil $T_1(Pm)$ qui est fonction de la puissance moyenne. En déterminant ces températures T et $T_1(Pm)$, on constate que, pour une puissance moyenne donnée, à partir du moment où la température T du fluide atteint la première valeur seuil T1, cette première température seuil $T_1$ varie peu autour d'une constante $T_1f$.

En se référant à présent à la figure 1, le circuit 2 comporte une première branche 8 munie d'un premier actionneur piloté électroniquement 18 et dans laquelle est disposé un échangeur eau/huile 13. De préférence, le premier actionneur 18 est du type "tout ou rien". Les moyens 19 de pilotage coopèrent avec les moyens 22 d'acquisition, pour commander l'ouverture ou la fermeture du premier actionneur 18, de façon à d'une part accélérer la vitesse de montée en température de l'huile et, d'autre part, réguler la température de l'huile autour d'une température de référence Tr déterminée.

Plus précisément, lorsque la température T du fluide de refroidissement déterminée par les moyens 22 d'acquisition est inférieure à la première température seuil $T_1$, les moyens de pilotage 19 limitent, et de préférence arrêtent, la circulation du fluide dans la première branche 8.

Par ailleurs, lorsque la température T du liquide de refroidissement est supérieure à la seconde température seuil $T_2$, les moyens de pilotage 19 régulent la température de l'huile autour de la température de référence Tr. La température de référence Tr de l'huile correspond à la température de fonctionnement optimal de l'huile. La température de référence Tr, qui dépend du type d'huile, est comprise classiquement entre 120 et 140 degrés environ, et est égale de préférence à 130 degrés environ. Pour ce faire, les moyens 22 d'acquisition comportent des moyens de mesure de la température de l'huile de lubrification, tel qu'un capteur approprié.

La figure 4 illustre un exemple de variation de la température de l'huile Th en fonction du temps t. Sur le même graphique est représenté un signal carré symbolisant les états d'ouverture O et de fermeture F de l'actionneur 18 de la première branche 8. Les crans supérieurs du signal carré représentent les moments d'ouverture O de l'actionneur 18. Les crans inférieurs du signal carré représentent les moments de fermeture F de ce même actionneur 18.

Ainsi, lorsque la température Th de l'huile excède la température de référence Tr d'une valeur déterminée $\Delta Ta$, les moyens de pilotage 19 assurent l'ouverture de l'actionneur 18 et donc la circulation du fluide dans la première branche 8. Par ailleurs, lorsque la température Th de l'huile est inférieure d'une valeur $\Delta Ta$ à la température de référence Tr, les moyens de pilotage 19 ferment l'actionneur 18 et donc arrêtent la circulation du fluide dans la première branche 8. Les différentiels de température $\Delta Ta$ qui déclenchent les ouvertures O et fermetures F du premier actionneur 18 sont de l'ordre, par exemple, de un à six degrés environ. Comme représenté à la figure 4, les différentiels de température $\Delta Ta$ sont égaux de préférence à deux degrés.

De cette façon, compte tenu de l'inertie thermique du système, la température Th de l'huile peut être maintenue autour de la température de référence Tr avec une tolérance de cinq degrés environ. Bien entendu, la température Th de l'huile peut être maintenue dans un intervalle plus grand ou plus petit. Pour cela, il suffit de changer les différentiels ou seuils $\Delta Ta$ d'ouverture et de fermeture du premier actionneur 18 autour de la température de référence Tr.

Avantageusement, lorsque la température T du liquide de refroidissement est comprise entre les première $T_1$ et seconde $T_2$ température seuil, les moyens de pilotage 19 peuvent n'ouvrir le premier actionneur 18 que lorsque la température du liquide excède la température de l'huile d'une seconde valeur $\Delta Tb$ déterminée. Cette seconde valeur $\Delta Tb$ peut être comprise, par exemple, entre 10 et 20 degrés environ et est égale de préférence à 15 degrés. De cette façon, le liquide de refroidissement contribue à accélérer la montée en température de l'huile.

En se référant à nouveau à la figure 1, le circuit 2 comporte une seconde branche 6 dite "de dégazage", munie d'un actionneur piloté électroniquement 16 et dans laquelle est disposée une boîte de dégazage 11.

Les moyens de pilotage 19 régulent la circulation du fluide de refroidissement de façon que la quantité de fluide circulant dans la seconde branche 6 est plus importante lorsque la température T du fluide de refroidissement est supérieure à la première température seuil $T_1$, que lorsque la température T du fluide est inférieure à cette première température seuil $T_1$.

Par ailleurs, les moyens de pilotage 19 régulent la circulation de fluide dans la branche 6 de dégazage pour que la quantité de fluide circulant dans celle-ci soit plus importante lorsque la température T du fluide est supérieure à la seconde température seuil $T_2$, que lorsque la température T du fluide est inférieure à cette seconde température seuil $T_2$.

De plus, lorsque la température T du fluide est comprise entre les première $T_1$ et seconde $T_2$ températures seuil, les moyens de pilotage 19 peuvent réguler la circulation de fluide dans la branche 6 de dégazage en fonction de la température T du liquide de refroidissement. Plus précisément, les moyens de pilotage 19 peuvent commander l'augmentation de la quantité de liquide de refroidissement circulant dans la branche 6 de dégazage lorsque la température T de ce liquide augmente. L'actionneur 16 de la branche 6 de dégazage est, de préférence, du type à "tout ou rien", c'est à dire à ouverture et fermeture totales.

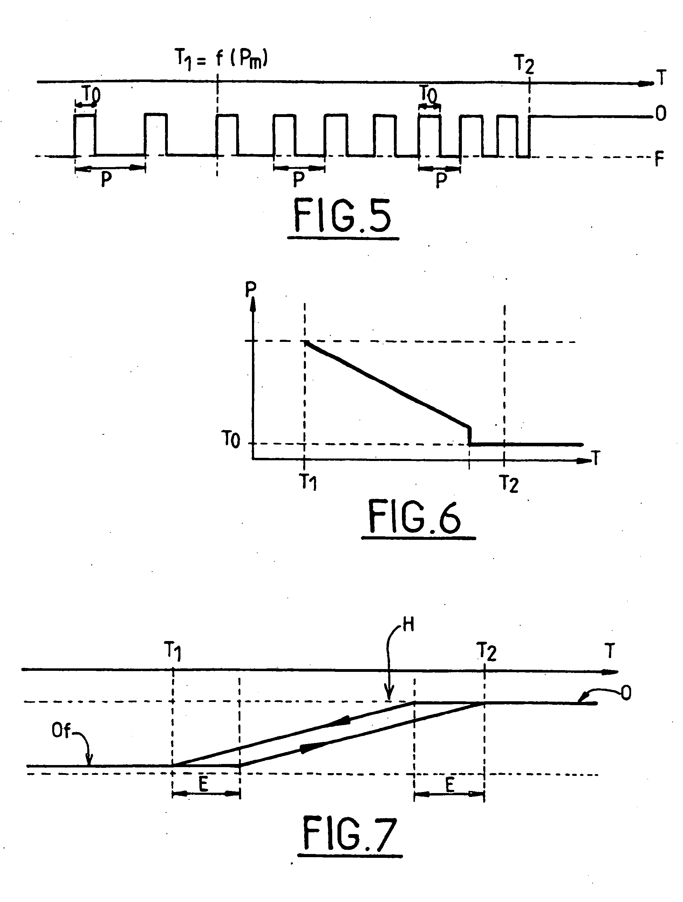

Comme représenté à la figure 5, lorsque la température T du fluide est supérieure à la seconde température seuil $T_2$, les moyens 19 de pilotage commandent l'ouverture, de préférence totale, du second actionneur 16.

Par ailleurs, lorsque la température du liquide de refroidissement T est inférieure à la première température seuil $T_1$, les moyens 19 de pilotage peuvent commander l'ouverture du second actionneur 16 en fonction de la puissance moyenne Pm fournie par le moteur 1. Plus précisément, les moyens 19 de pilotage augmentent la quantité de liquide admise à circuler dans la branche 6 de dégazage lorsque la puissance moyenne Pm fournie par le moteur 1 augmente. L'actionneur 16 de la branche 6 est commandée, par exemple, par un signal carré variable en fonction de la puissance moyenne Pm fournie par le moteur 1. La partie haute du signal représente les ouvertures O de l'actionneur 16, tandis que la partie basse représente les fermetures F de l'actionneur 16.

Lorsque le moteur est dans son état froid $(T<T_1)$, le signal carré de commande de l'actionneur 16 peut être périodique. En particulier, le temps d'ouverture To de l'actionneur 16 peut être constant, tandis que la période P du signal peut varier en fonction de la puissance moyenne Pm. C'est à dire que les temps de fermeture de la vanne 16 peuvent diminuer, par exemple linéairement, lorsque la puissance moyenne Pm du moteur augmente.

Lorsque le moteur 1 est dans son état intermédiaire (température du fluide T comprise entre les première $T_1$ et seconde $T_2$ températures seuil), les moyens 19 de pilotage commandant l'ouverture de l'actionneur 16 selon un signal carré variable en fonction de la température T du liquide de refroidissement. En particulier, le temps d'ouverture To de l'actionneur 16 peut être constant, tandis que la période P du signal peut diminuer lorsque la température T du liquide de refroidissement augmente.

Comme représenté à la figure 6, entre $T_1$ et $T_2$, la période P du signal carré peut être inversement proportionnelle à la température T du liquide. De plus, lorsque la température T du liquide s'approche de la seconde température seuil $T_2$, la droite représentative de l'évolution de la période P peut présenter une discontinuité, de façon que la période P reste constante et égale au temps d'ouverture To. C'est-à-dire que, lorsque la température T du liquide atteint, par exemple, la seconde température

seuil $T_2$ moins cinq degrés environ, la droite décroissante représentant la période P est suivie d'une portion constante horizontale.

Le temps d'ouverture To de l'actionneur 16 peut être de l'ordre de quelques secondes et par exemple cinq secondes. La période du signal de commande de l'actionneur 16 peut quant à elle varier, par exemple, entre 5 et 50 secondes.

Bien entendu, tout autre type de signal approprié peut être utilisé pour commander le second actionneur 16. Par exemple, comme précédemment, il est possible de faire varier le temps d'ouverture To de la vanne, en plus ou à la place du temps de fermeture.

Comme illustré à la figure 1, le circuit 2 comporte une troisième branche 5 munie d'un actionneur piloté électroniquement 15 et associée à des moyens 10 formant retour direct de fluide ou by-pass. Les moyens 19 de pilotage peuvent réguler la circulation du fluide de refroidissement dans la branche 5 de by-pass en fonction de la température T de ce fluide. En particulier, la quantité de fluide admise à circuler dans la branche 5 by-pass augmente lorsque la température du fluide croît de la première $T_1$ vers la seconde température seuil $T_2$. De préférence, l'actionneur piloté électroniquement 15 de la branche 5 by-pass est du type proportionnel.

Comme représenté à la figure 7, lorsque la température du fluide T est inférieure à la première température seuil $T_1$, les moyens de pilotage 19 peuvent limiter à un débit de fuite déterminé la circulation de fluide dans la branche 5 by-pass. C'est à dire que l'actionneur 15 de la branche 5 by-pass est partiellement ouvert Of. Par exemple, l'ouverture partielle Of de l'actionneur 15 peut assurer un débit de fuite dans la branche 5 by-pass compris entre 1/50ème à 1/5ème environ du débit maximal de la branche 5.

Lorsque la température du fluide est supérieure à la seconde température seuil $T_2$, les moyens de pilotage 19 commandent au moins temporairement l'ouverture totale O de l'actionneur 15 de by-pass (figure 7). Par ailleurs, lorsque la température du fluide est comprise entre les première $T_1$ et seconde températures seuil $T_2$, le degré d'ouverture de l'actionneur 15 peut être au moins temporairement proportionnel à la température T du fluide de refroidissement. Plus précisément, entre $T_1$ et $T_2$, l'ouverture de l'actionneur 15 de by-pass croît lorsque la température T du fluide croît et, diminue lorsque la température T du fluide diminue. La variation de l'ouverture de l'actionneur 15 peut être proportionnelle à la température du fluide T.

Avantageusement, la courbe représentative de l'ouverture de l'actionneur 15 en fonction de la température T du fluide peut présenter une hystérésis H. C'est-à-dire que, l'augmentation de l'ouverture de l'actionneur 15 commence après que la température du liquide T excède la première température de référence $T_1$ d'une première valeur E déterminée. De même, la diminution de l'ouverture de l'actionneur 15 commence après que la température T du liquide devient inférieure, d'une première valeur E déterminée, à la seconde température de référence $T_2$. C'est-à-dire que les ouvertures et fermetures de l'actionneur 15 sont réalisées de façon décalée par rapport respectivement aux seuils de températures $T_1$ et $T_2$. Les valeurs E de ces décalages sont par, exemple, de l'ordre de 5 degrés.

En se référant à nouveau à la figure 1, le circuit comprend une quatrième branche 4 munie d'un actionneur piloté électroniquement 14 et pourvue de moyens 9 formant radiateur. Les moyens 9 radiateur peuvent être couplés à un groupe moto ventilateur 30, qui peut lui aussi être commandé par les moyens de pilotage 19. L'actionneur 14 de la quatrième branche 4 est du type proportionnel.

Avantageusement, lorsque la température T du fluide est supérieure à la seconde température seuil $T_2$, les moyens de pilotage 19 peuvent commander l'actionneur 15 de la branche 5 by-pass en fonction de l'ouverture et la fermeture de l'actionneur 14 de la branche 4 radiateur.

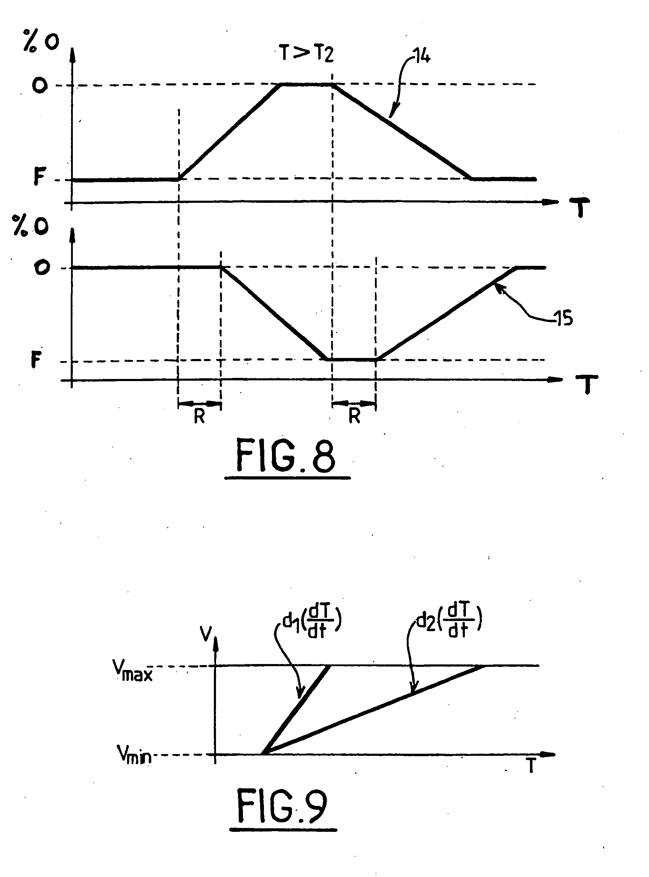

La figure 8 illustre le pourcentage d'ouverture %O des actionneurs 15, 14 des troisième et quatrième branches 5, 4 en fonction de la température T du liquide de refroidissement. Comme représenté à la figure 8, les moyens de pilotage 19 peuvent fermer F l'actionneur 15 de la branche 5 by-pass lorsque l'actionneur 14 de la branche 4 radiateur est ouvert O. De même, l'actionneur 15 de la branche 5 by-pass est ouvert O lorsque l'actionneur 14 de la branche 4 radiateur est fermé F. De préférence, l'ouverture de l'actionneur 15 de la branche 5 by-pass est inversement proportionnelle à l'ouverture de l'actionneur 14 de la branche 4 radiateur.

Par ailleurs, les fermetures et ouvertures de l'actionneur 15 de la branche 5 by-pass peuvent être réalisées avec un décalage de température R déterminé par rapport aux ouvertures et fermetures de l'actionneur 14 de la branche 4 radiateur. Le décalage de température R peut être de l'ordre de quelques degrés, par exemple cinq degrés.

Comme représenté à la figure 9, les moyens de pilotage 19 peuvent commander les moyens 30 de ventilation en fonction de la température du liquide de refroidissement. Plus précisément, la vitesse de rotation des moyens 30 de ventilation peut augmenter lorsque la température T du liquide de refroidissement croît.

De préférence, la vitesse V de rotation des moyens 30 de ventilation augmente proportionnellement à la vitesse de variation de la température du liquide de

refroidissement $\dfrac{dT}{dt}$. La figure 9 illustre deux exemples de droites d1 et d2 représentant la vitesse de rotation du groupe moto ventilateur en fonction de la température T du liquide. Les deux droites d1 et d2 ont des pentes différentes représentatives chacune d'une vitesse de variation $\dfrac{dT}{dt}$ de la température T du liquide de refroidissement. La vitesse de variation $\dfrac{dT}{dt}$ de la température T du liquide de refroidissement peut être calculée par les moyens 19 de pilotage.

Le circuit 2 de refroidissement représenté à la figure 1 comporte également une cinquième branche 7 munie d'un actionneur piloté électroniquement 17 et dans laquelle sont disposés des moyens 12 formant aérotherme d'habitacle. Classiquement, les moyens aérotherme 17 peuvent être conformés pour assurer un chauffage de l'habitacle à une première température consigne Tc déterminée par l'utilisateur du véhicule.

Les moyens de pilotage 20 coopèrent avec les moyens 22 d'acquisition, pour déterminer la température Te extérieure au véhicule. Lorsque la température extérieure Te est inférieure à la première température consigne Tc, les moyens de pilotage 20 peuvent ouvrir l'actionneur de la branche 7 aérotherme. De la même façon, lorsque la température extérieure Te est supérieure à la première température consigne Tc, les moyens de pilotage 20 peuvent fermer l'actionneur de la branche 7 aérotherme.

De la même façon, les moyens 12 aérotherme peuvent comporter une fonction climatisation de l'habitacle à une seconde température consigne Tr. Ainsi, lorsque la température extérieure Te est inférieure à la seconde température consigne Tr, les moyens de pilotage 20 peuvent ouvrir l'actionneur de la branche 7 aérotherme. De même, lorsque la température extérieure Te est supérieure à la seconde température consigne Tr, les moyens de pilotage 20 peuvent fermer l'actionneur de la branche 7 aérotherme.

Cette cinquième branche 7 peut comporter également éventuellement de moyens 160 de chauffage supplémentaires et/ou des moyens 150 de recirculation des gaz d'échappement du moteur 1 à l'admission. Classiquement, les moyens 150 formant recirculation d'au moins une partie des gaz d'échappement du moteur 1 à l'admission ou "Exaust Gaz Recycling (EGR)", permettent de contrôler la température des gaz de combustion du moteur pour, par exemple, un traitement anti-pollution.

Enfin, le circuit 2 représenté à la figure 1 comprend une sixième branche 44 dans laquelle est situé des moyens 140 formant réchauffage de l'air d'admission du moteur 1. Cette sixième branche 44 est également munie d'un actionneur piloté électroniquement 29 commandée par les moyens 19 de pilotage.

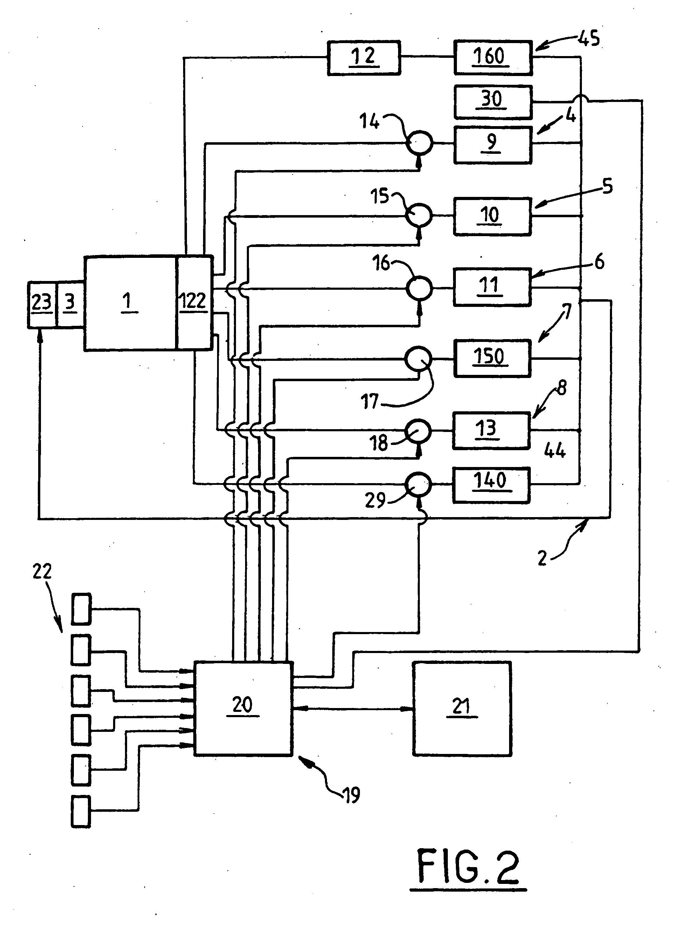

La figure 2 illustre une variante de réalisation du dispositif de refroidissement selon l'invention. Le dispositif représenté à la figure 2 diffère de celui de la figure 1 en ce que les moyens aérotherme 12 et les moyens 160 de chauffage sont disposés dans une septième branche 45 qui est distincte de la sixième branche 7 associée aux moyens 150 de recirculation des gaz d'échappement (EGR). Par ailleurs, la septième branche 45 est dépourvue d'actionneur piloté électroniquement.

Bien entendu, l'invention ne saurait se limiter aux exemples de réalisation des figures 1 et 2. En effet, le dispositif de refroidissement peut ne comporter qu'une partie des équipements thermiques 9, 10, 11, 12, 13, 140, 150, 16 et/ou des branches 4, 5, 6, 7, 8, 44, 45 décrits ci-dessus. De plus, une ou plusieurs des branches 4, 5, 6, 7, 8, 44, 45 peuvent être dépourvue d'actionneur piloté électroniquement.

Avantageusement, les moyens 22 d'acquisition d'informations peuvent être conformés pour détecter une éventuelle défaillance d'au moins un des actionneurs pilotés électroniquement. De cette façon, lorsqu'au moins une défaillance d'un actionneur est détectée et quelle que soit la température du fluide, les moyens de pilotage 19 peuvent assurer la circulation libre du fluide dans au moins certaines des branches, et de préférence dans toutes les branches. C'est-à-dire que, lorsqu'une défaillance du système est détectée, toutes les vannes du circuit 2 sont ouvertes. On conçoit donc aisément que le dispositif de refroidissement selon l'invention, tout en étant de structure simple, permet de gérer en temps réel et de manière optimum les échanges de chaleur.

Enfin, bien que l'invention ait été décrite en liaison avec des modes de réalisation particuliers, elle comprend tous les équivalents techniques des moyens décrits.

**Revendications**

1. Procédé de refroidissement d'un moteur de véhicule automobile, consistant à réguler le volume et le débit d'un fluide caloporteur de refroidissement dans un circuit hydraulique (2) pourvu d'une branche (6) de dégazage dans laquelle est disposée une boîte de dégazage (11), le procédé comportant une étape de détermination de la température (T) du liquide de refroidissement, une étape de comparaison de la température du liquide de refroidissement avec une première température seuil ($T_1$), et une étape de régulation de la circulation de fluide dans la branche (6) de dégazage de façon que, lorsque la température (T) du fluide est supérieure à une première température seuil ($T_1$), la quantité de fluide circulant dans la branche (6) est supérieure à la quantité de fluide circulant dans cette même branche (6) lorsque la température (T) du fluide est inférieure à la première température seuil ($T_1$) et **caractérisé en ce qu'**il comporte une étape de comparaison de la température (T) du fluide de refroidissement avec une seconde température seuil ($T_2$), de façon que, lorsque la température (T) du fluide est supérieure à cette seconde température seuil ($T_2$), la quantité de fluide admise à circuler dans la branche (6) est supérieure à la quantité admise à circuler dans cette même branche (6) lorsque la température (T) du fluide est inférieure à la seconde température seuil ($T_2$).

2. Dispositif de refroidissement d'un moteur de véhicule automobile, du type comportant un circuit hydraulique (2) de fluide caloporteur de refroidissement, associé à une pompe (3) de circulation de celui-ci à travers le moteur (1) du véhicule et différentes branches (4, 5, 6, 7, 8, 44, 45) du circuit, dans lesquelles sont disposés des équipements thermiques (9, 10, 11, 12, 13, 140, 150, 160) du véhicule, au moins certaines des branches (4, 5, 6, 7, 8, 44) du circuit (2) étant munies d'actionneurs pilotés électroniquement (14, 15, 16, 17, 18, 29) de régulation de la circulation du fluide dans celles-ci, le, dispositif comportant des moyens (22) d'acquisition d'informations relatives aux conditions de fonctionnement du véhicule, raccordés à des moyens (19) de pilotage du fonctionnement des actionneurs (14, 15, 16, 17, 18, 29), pour réguler le volume et le débit de fluide en circulation dans le circuit hydraulique (2) afin d'optimiser le fonctionnement du moteur (1), le circuit (2) comporte une branche (6) de dégazage munie d'un actionneur (16) et dans laquelle est disposée une boîte de dégazage (11), les moyens de pilotage (19) régulant la circulation de fluide dans la branche (6) de dégazage de façon que, lorsque la température (T) du fluide est supérieure à une première température seuil ($T_1$), la quantité de fluide circulant dans la branche (6) est supérieure à la quantité de fluide circulant dans cette même branche (6) lorsque la température (T) du fluide est inférieure à la première température seuil ($T_1$), **caractérisé en ce que** l'actionneur (19) est piloté électroniquement et **en ce que** les moyens (22) d'acquisition d'informations sont aptes à déterminer la température (T) du liquide de refroidissement, et **en ce que** les moyens de pilotage (19) régulent la circulation de fluide dans la branche (6) de dégazage, de façon que, lorsque la température (T) du fluide est supérieure à une seconde température seuil ($T_2$), la quantité de fluide circulant dans la branche (6) est supérieure à la quantité de fluide circulant dans cette même branche (6) lorsque la température (T) du fluide est inférieure à cette seconde température seuil ($T_2$).

3. Dispositif selon la revendication 2, **caractérisé en ce que** lorsque la température (T) du fluide est comprise entre les première (Ti) et seconde ($T_2$) températures seuil, les moyens de pilotage (19) régulent la circulation de fluide dans la branche (6) en fonction de la température (T) du liquide de refroidissement, de façon que la quantité de liquide circulant dans la branche (6) augmente lorsque la température (T) du liquide augmente.

4. Dispositif selon la revendication 2 ou 3, **caractérisé en ce que** t'actionneur (16) de la branche (6) de dégazage est du type "tout ou rien", les moyens (19) de pilotage coopérant avec les moyens (22) d'acquisition, pour commander l'ouverture de t'actionneur (16) lorsque la température du fluide est supérieure à la seconde température seuil ($T_2$).

5. Dispositif selon l'une quelconque des revendications 2 à 4, **caractérisé en ce que** la seconde température seuil ($T_2$) est comprise entre 60 et 100 degrés environ.

6. Dispositif selon l'une quelconque des revendications 2 à 5, **caractérisé en ce que** la première température seuil ($T_1$) est comprise entre 20 et 60 degrés environ et définit la température de fluide en dessous de laquelle l'état du moteur (1) est dit "froid".

7. Dispositif selon la revendication 6, **caractérisé en ce que** les moyens de pilotage (19) coopèrent avec les moyens (22) d'acquisition, pour calculer d'une part de la puissance moyenne instantanée (Pm) fournie par le moteur (1) puis, d'autre part, la première température seuil ($T_1$) en fonction de la puissance moyenne (Pm) instantanée et d'une modélisation déterminée du fonctionnement du moteur (1) définissant son état froid (première température seuil $T_1$) en fonction puissance moyenne (Pm).

8. Dispositif selon la revendication 7, **caractérisé en ce que** lorsque la température (T) du liquide de refroidissement est inférieure à la première température seuil ($T_1$), les moyens (19) de pilotage commandent l'ouverture de l'actionneur (16) et la quantité de fluide circulant dans la branche (6) de dégazage en fonction de la puissance moyenne (Pm) fournie par le moteur (1), la quantité de liquide admise à circuler dans la branche (6) augmentant lorsque la puissance moyenne (Pm) fournie par le moteur (1) augmente.

9. Dispositif selon la revendication 8, **caractérisé en ce que** l'actionneur (16) de la branche (6) de dégazage est du type "tout ou rien", les moyens (19) de pilotage commandant l'ouverture de l'actionneur (16) selon un signal carré variable en fonction de la puissance moyenne (Pm) fournie par le moteur (1).

10. Dispositif selon la revendication 3, **caractérisé en ce que** l'actionneur (16) de la branche (6) de dégazage est du type à ouverture et fermeture totales, les moyens (19) de pilotage commandant l'ouverture de l'actionneur (16) selon un signal carré variable en fonction de la température (T) du liquide de refroidissement.

11. Dispositif selon la revendication 10, **caractérisé en ce que** les moyens (19) de pilotage commandant l'ouverture de l'actionneur (16) selon un signal carré tel que la quantité de liquide circulant dans la branche (6) augmente linéairement avec la température (T) du liquide de refroidissement.

12. Dispositif selon la revendication 10 ou 11, **caractérisé en ce que** le temps d'ouverture de la vanne (To) est constant, la période (P) du signal étant inversement proportionnelle à la température (T) du liquide de refroidissement.

## Claims

1. Method for cooling a motor vehicle engine, consisting in regulating the volume and flow of a coolant fluid in a hydraulic circuit (2) provided with a degassing branch (6) in which a degassing box (11) is placed, the method comprising a step of determining the temperature (T) of the cooling liquid, a step of comparing the temperature of the cooling liquid with a first threshold temperature ($T_1$), and a step of regulating the circulation of fluid in the degassing branch (6) so that, when the temperature (T) of the fluid is higher than a first threshold temperature ($T_1$), the quantity of fluid circulating in the branch (6) is greater than the quantity of fluid circulating in this same branch (6) when the temperature (T) of the fluid is lower than the first threshold temperature ($T_1$), and **characterized in that** it comprises a step of comparing the temperature (T) of the cooling fluid with a second threshold temperature ($T_2$) so that, when the temperature (T) of the fluid is higher than this second threshold temperature ($T_2$), the quantity of fluid allowed to circulate in the branch (6) is greater than the quantity allowed to circulate in this same branch (6) when the temperature (T) of the fluid is lower than the second threshold temperature ($T_2$).

2. Device for cooling a motor vehicle engine, of the type comprising a hydraulic circuit (2) of coolant fluid, associated with a pump (3) for circulating the latter through the engine (1) of the vehicle and various branches (4, 5, 6, 7, 8, 44, 45) of the circuit, in which thermal equipment items (9, 10, 11, 12, 13, 140, 150, 160) of the vehicle are placed, at least certain of the branches (4, 5, 6, 7, 8, 44) of the circuit (2) being furnished with electronically driven actuators (14, 15, 16, 17, 18, 29) for regulating the circulation of the fluid in the latter, the device comprising means (22) for acquisition of information relative to the operating conditions of the vehicle, connected to means (19) for controlling the operation of the actuators (14, 15, 16, 17, 18, 29) in order to regulate the volume and the flow of fluid in circulation in the hydraulic circuit (2) in order to optimize the operation of the engine (1), the circuit (2) comprises a degassing branch (6) that is furnished with an actuator (16) and in which a degassing box (11) is placed, the control means (19) regulating the circulation of fluid in the degassing branch (6) so that, when the temperature (T) of the fluid is higher than a first threshold temperature ($T_1$), the quantity of fluid circulating in the branch (6) is greater than the quantity of fluid circulating in this same branch (6) when the temperature (T) of the fluid is lower than the first threshold temperature ($T_1$), **characterized in that** the actuator (19) is controlled electronically and **in that** the information acquisition means (22) are capable of determining the temperature (T) of the cooling liquid, and **in that** the control means (19) regulate the circulation of fluid in the degassing branch (6), so that, when the temperature (T) of the fluid is higher than a second threshold temperature ($T_2$), the quantity of fluid circulating in the branch (6) is greater than the quantity of fluid circulating in this same branch (6) when the temperature (T) of the fluid is lower than this second threshold temperature ($T_2$).

3. Device according to Claim 2, **characterized in that**, when the temperature (T) of the fluid lies between the first threshold temperature ($T_1$) and the second threshold temperature ($T_2$), the control means (19) regulate the circulation of the fluid in the branch (6) according to the temperature (T) of the cooling liquid, so that the quantity of liquid circulating in the branch (6) increases when the temperature (T) of the liquid increases.

4. Device according to Claim 2 or 3, **characterized in that** the actuator (16) of the degassing branch (6) is of the "open/shut" type, the control means (19) interacting with the acquisition means (22), in order to command the opening of the actuator (16) when the temperature of the fluid is higher than the second threshold temperature ($T_2$) .

5. Device according to any one of Claims 2 to 4, **characterized in that** the second threshold temperature ($T_2$) lies between approximately 60 and 100 degrees.

6. Device according to any one of Claims 2 to 5, **characterized in that** the first threshold temperature ($T_1$) lies between 20 and 60 degrees approximately and defines the fluid temperature below which the state of the engine (1) is called "cold".

7. Device according to Claim 6, **characterized in that** the control means (19) interact with the acquisition means (22) in order to compute, on the one hand, the average instantaneous power (Pm) supplied by the engine (1) then, on the other hand, the first threshold temperature ($T_1$) as a function of the average instantaneous power (Pm) and of a determined modelling of the operation of the engine (1) defining its cold state (first threshold temperature $T_1$) as a function of average power (Pm).

8. Device according to Claim 7, **characterized in that**, when the temperature (T) of the cooling liquid is lower than the first threshold temperature ($T_1$), the control means (19) command the opening of the actuator (16) and the quantity of fluid circulating in the degassing branch (6) as a function of the average power (Pm) supplied by the engine (1), the quantity of liquid allowed to circulate in the branch (6) increasing when the average power (Pm) supplied by the engine (1) increases.

9. Device according to Claim 8, **characterized in that** the actuator (16) of the degassing branch (6) is of the "open/shut" type, the control means (19) commanding the opening of the actuator (16) according to a square signal that can vary as a function of the average power (Pm) supplied by the engine (1).

10. Device according to Claim 3, **characterized in that** the actuator (16) of the degassing branch (6) is of the total opening and closure type, the control means (19) commanding the opening of the actuator (16) according to a square signal that can vary as a function of the temperature (T) of the cooling liquid.

11. Device according to Claim 10, **characterized in that** the control means (19) command the opening of the actuator (16) according to a square signal such that the quantity of liquid circulating in the branch (6) increases linearly with the temperature (T) of the cooling liquid.

12. Device according to Claim 10 or 11, **characterized in that** the time of opening of the valve (To) is constant, the period (P) of the signal being inversely proportional to the temperature (T) of the cooling liquid.

**Patentansprüche**

1. Verfahren zur Kühlung eines Motors eines Kraftfahrzeugs, darin bestehend, das Volumen und die Menge eines Kühlfluids in einer Hydraulikschaltung (2) zu regeln, die mit einem Entgasungsabschnitt (6) versehen ist, in dem ein Entgasungsgehäuse (11) angeordnet ist, wobei das Verfahren einen Schritt der Bestimmung der Temperatur (T) der Kühlflüssigkeit, einen Schritt des Vergleichens der Temperatur der Kühlflüssigkeit mit einer ersten Schwellentemperatur ($T_1$) und einen Schritt der Regelung der Fluidzirkulation in dem Entgasungsabschnitt (6) umfasst, so dass, wenn die Temperatur (T) des Fluids größer als eine erste Schwellentemperatur ($T_1$) ist, die in dem Abschnitt (6) zirkulierende Fluidmenge größer als die in diesem selben Abschnitt (6) zirkulierende Fluidmenge ist, wenn die Temperatur (T) des Fluids geringer als die erste Schwellentemperatur ($T_1$) ist, und **dadurch gekennzeichnet, dass** es einen Schritt des Vergleichens der Temperatur (T) des Kühlfluids mit einer zweiten Schwellentemperatur ($T_2$) umfasst, so dass, wenn die Temperatur (T) des Fluids größer als diese zweite Schwellentemperatur ($T_2$) ist, die für die Zirkulation in dem Abschnitt (6) zugelassene Fluidmenge größer als die für die Zirkulation in diesem selben Abschnitt (6) zugelassene Fluidmenge ist, wenn die Temperatur (T) des Fluids geringer als die zweite Schwellentemperatur ($T_2$) ist.

2. Kühlvorrichtung für einen Motor eines Kraftfahrzeugs, umfassend eine Hydraulikschaltung (2) eines Kühlfluids in Verbindung mit einer Zirkulationspumpe (3) für dieses durch den Motor (1) des Fahrzeugs und verschiedene Abschnitte (4, 5, 6, 7, 8, 44, 45) der Schaltung, in denen thermische Ausrüstungen (9, 10, 11, 12, 13, 140, 150, 160) des Fahrzeugs angeordnet sind, wobei mindestens manche der thermischen Ausrüstungen (4, 5, 6, 7, 8, 44) der Schaltung (2) mit elektronisch gesteuerten Betätigungselementen (14, 15, 16, 17, 18, 29) zur Regelung der Fluidzirkulation in ihnen ausgestattet sind, wobei die Vorrichtung Mittel (22) zur Erfassung von Informationen über die Funktionsbedingungen des Fahrzeugs umfasst, die an Mittel (19) zur Steuerung der Funktion der Betätigungselemente (14, 15, 16, 17, 18, 29) angeschlossen sind, um das Volumen und die Menge des in der Hydraulikschaltung (2) zirkulierenden Fluids zu regeln, um die Funktion des Motors (1) zu optimieren, wobei die Schaltung (2) einen Entgasungsabschnitt (6) umfasst, der mit einem Betätigungselement (16) versehen ist und in der ein Entgasungsgehäuse (11) angeordnet ist, wobei die Steuermittel (19) die Fluidzirkulation in dem Entgasungsabschnitt (6) regeln, so dass, wenn die Temperatur (T) des Fluids größer als eine erste Schwellentemperatur ($T_1$) ist, die in dem Abschnitt (6) zirkulierende Fluidmenge größer als die in diesem selben Abschnitt (6) zirkulierende Fluidmenge ist, wenn die Temperatur (T) des Fluids geringer als die erste Schwellentemperatur ($T_1$) ist, **dadurch gekennzeichnet, dass** das Betätigungselement (19) elektronisch gesteuert wird, und dass die Mittel (22) zur Informationserfassung in der Lage sind, die Temperatur (T) der Kühlflüssigkeit zu bestimmen, und dass die Steuermittel (19) die Fluidzirkulation in dem Entgasungsabschnitt (6) regeln, so dass, wenn die Temperatur (T) des Fluids größer als eine zweite Schwellentemperatur ($T_2$) ist, die in dem Abschnitt (6) zirkulierende Fluidmenge größer als die in diesem selben Abschnitt (6) zirkulierende Fluidmenge ist, wenn die Temperatur (T) des Fluids geringer als diese zweite Schwellentemperatur ($T_2$) ist.

3. Vorrichtung nach Anspruch 2, **dadurch gekennzeichnet, dass**, wenn die Temperatur (T) des Fluids zwischen der ersten ($T_1$) und zweiten Schwellentemperatur ($T_2$) liegt, die Steuermittel (19) die Fluidzirkulation in dem Abschnitt (6) in Abhängigkeit von der Temperatur (T) der Kühlflüssigkeit regeln, so dass die in dem Abschnitt (6) zirkulierende Flüssigkeitsmenge steigt, wenn die Temperatur (T) der Flüssigkeit steigt.

4. Vorrichtung nach Anspruch 2 oder 3, **dadurch gekennzeichnet, dass** das Betätigungselement (16) des Entgasungsabschnitts (6) vom Typ "alles oder nichts" ist, wobei die Steuermittel (19) mit den Erfassungsmitteln (22) zusammenwirken, um die Öffnung des Betätigungselements (16) zu steuern, wenn die Temperatur des Fluids höher als die zweite Schwellentemperatur ($T_2$) ist.

5. Vorrichtung nach einem der Ansprüche 2 bis 4, **dadurch gekennzeichnet, dass** die zweite Schwellentemperatur ($T_2$) zwischen ungefähr 60 und 100 Grad beträgt.

6. Vorrichtung nach einem der Ansprüche 2 bis 5, **dadurch gekennzeichnet, dass** die erste Schwellentemperatur ($T_1$) zwischen 20 und 60 Grad ungefähr beträgt und die Fluidtemperatur definiert, unter der der Zustand des Motors (1) "kalt" genannt wird.

7. Vorrichtung nach Anspruch 6, **dadurch gekennzeichnet, dass** die Steuermittel (19) mit den Erfassungsmitteln (22) zusammenwirken, um einerseits die momentane Durchschnittsleistung (Pm), die vom Motor (1) geliefert wird, und andererseits die erste Schwellentemperatur ($T_1$) in Abhängigkeit von der momentanen Durchschnittsleistung (Pm) und einer bestimmten Modellierung der Funktion des Motors (1) zu berechnen, die seinen kalten Zustand (erste Schwellentemperatur $T_1$) in Abhängigkeit von der Durchschnittsleistung (Pm) definiert.

8. Vorrichtung nach Anspruch 7, **dadurch gekennzeichnet, dass**, wenn die Temperatur (T) der Kühlflüssigkeit geringer als die erste Schwellentemperatur ($T_1$) ist, die Steuermittel (19) die Öffnung des Betätigungselements (16) und die in dem Entgasungsabschnitt (6) zirkulierende Fluidmenge in Abhängigkeit von der Durchschnittsleistung (Pm), die vom Motor (1) geliefert wird, steuern, wobei die zum Zirkulieren in dem Abschnitt (6) zugelassene Flüssigkeitsmenge steigt, wenn die Durchschnittsleistung (Pm), die vom Motor (1) geliefert wird, steigt.

9. Vorrichtung nach Anspruch 8, **dadurch gekennzeichnet, dass** das Betätigungselement (16) des Entgasungsabschnitts (6) vom Typ "alles oder nichts" ist, wobei die Steuermittel (19) die Öffnung des Betätigungsmittels (16) nach einem variablen Quadratsignal in Abhängigkeit von der vom Motor (1) gelieferten Durchschnittsleistung (Pm) steuert.

10. Vorrichtung nach Anspruch 3, **dadurch gekennzeichnet, dass** das Betätigungselement (16) des Entgasungsabschnitts (6) vom Typ mit vollständigem Öffnen und Schließen ist, wobei die Steuermittel (19) die Öffnung des Betätigungsmittels (16) nach einem variablen Quadratsignal in Abhängigkeit von der Temperatur (T) der Kühlflüssigkeit steuern.

11. Vorrichtung nach Anspruch 10, **dadurch gekennzeichnet, dass** die Steuermittel (19) die Öffnung des Betätigungselements (16) nach einem Quadratsignal steuern, so dass die in dem Abschnitt (6) zirkulierende Flüssigkeitsmenge linear mit der Temperatur (T) der Kühlflüssigkeit steigt.

12. Vorrichtung nach Anspruch 10 oder 11, **dadurch gekennzeichnet, dass** die Öffnungszeit des Ventils (To) konstant ist, wobei die Periode (P) des Signals umgekehrt proportional zur Temperatur (T) der Kühlflüssigkeit ist.

FIG.1

# FIG.2

FIG.3

FIG.4

$T_1 = f(P_m)$

FIG.5

FIG.6

FIG.7

FIG.8

FIG.9

**EP 1 409 856 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4913107 A